# FASCICULE DE BREVET EUROPEEN

(11) **EP 1 132 346 B1**
(45) Date de publication et mention de la délivrance du brevet: **25.01.2006**
(21) Numéro de dépôt: 01400626.6
(22) Date de dépôt: 09.03.2001
(51) Int. Cl.: C02F 1/62

(54) **Procédé de traitement de milieux liquides contenant des métaux lourds et des ions sulfates**
Verfahren zur Behandlung flüssiger Medien, die Schwermetalle und Sulfationen enthalten
Process for treating liquid mediums containig heavy metals and sulfate ions

(30) Priorité: 10.03.2000 FR 0003119
(43) Date de publication de la demande: 12.09.2001
(73) Titulaire: COMMISSARIAT A L'ENERGIE ATOMIQUE, 75752 Paris Cédex 15 (FR); CENTRE NATIONAL DE LA RECHERCHE SCIENTIFIQUE (CNRS), 75794 Paris Cedex 16 (FR)
(72) Inventeur: Gadelle, Andrée, 38330 Montbonnot (FR)
(74) Mandataire: Audier, Philippe André

(56) Documents cités:
- US-A- 4 652 381
- US-A- 5 160 482
- US-A- 5 858 242
- PATENT ABSTRACTS OF JAPAN vol. 1999, no. 5, 31 mai 1999 (1999-05-31) & JP 11 050168 A (CANON KK), 23 février 1999 (1999-02-23)

## Description

L'invention a trait à un procédé de traitement de milieux liquides, en particulier de milieux aqueux, contenant des métaux lourds et des ions sulfates, afin d'éliminer ces derniers et d'en éviter le rejet, et, en outre, afin de recycler le milieu liquide, tel que l'eau, de décontamination.

L'invention s'applique notamment au traitement des effluents aqueux et acides issus des batteries au plomb, aussi bien lors de leur fabrication que de leur destruction.

Le domaine technique de l'invention peut être défini de manière générale comme celui du traitement de milieux liquides, en particulier de milieux aqueux en vue d'en éliminer les métaux lourds et notamment le plomb.

De manière générale, on entend par métal lourd, un métal dont la masse atomique est moyenne ou élevée, ou plus couramment un métal qui est toxique pour les plantes, les animaux et les hommes et qui se concentré le long des chaînes alimentaires.

Dans ce qui suit, on s'intéressera souvent plus particulièrement au plomb, mais les mêmes remarques peuvent s'appliquer aux autres métaux. On sait en effet que le plomb est un métal toxique, même à de très faibles concentrations, pour les organismes vivants, dans lesquels il s'accumule au niveau cellulaire et ne peut être facilement éliminé.

L'intoxication lente par le plomb provoque des troubles graves qui sont classés sous le terme général de-saturnisme, qu'il soit qualifié de récent ou de latent.

On pourra, en ce qui concerne la toxicité du plomb, se référer au document de R. FAIVRE et R. WEISS, « Propriétés physiologiques du plomb », pages 505 à 506, Nouveau traité de chimie minérale de P. PASCAL, Tome VIII, Troisième fascicule, Masson Ed., 1963.

Le plomb peut être ingéré par voie digestive, et, plus rarement, par voie respiratoire ou par voie cutanée.

C'est la raison pour laquelle, eu égard à la très forte toxicité du plomb, même à de faibles doses, que des réglementations très strictes sont appliquées aux eaux usées rejetées. Ainsi, certaines normes prévoient-elles que la teneur en plomb de ces eaux ne doit pas excéder 0,1 mg/l actuellement et même que cette teneur doit être nulle. Un intérêt sanitaire fondamental conduit donc à supprimer totalement les rejets en plomb et en autres métaux lourds.

Le procédé le plus couramment utilisé pour éliminer le plomb et les autres métaux lourds consiste à ajouter un agent de précipitation au milieu, de façon à former un sel insoluble de plomb qui précipite.

De tels agents de précipitation sont, par exemple, les hydroxydes métalliques, les carbonates, les sulfates ou les sulfures.

Les carbonates ont l'avantage de précipiter le plomb sous la forme de carbonate de plomb, associé à l'oxyde et à l'hydroxyde de plomb, composés dont les produits de solubilité dans l'eau sont faibles.

Ainsi, le document US-A-5 858 242 décrit l'utilisation de carbonate de métaux alcalins, tels que le carbonate de sodium, pour récupérer les cations de métaux lourds à partir d'effluents aqueux, comme les eaux de rinçage des fumées issues de l'incinération de déchet ; mais le carbonate de métal alcalin doit être obligatoirement associé à un composé de type silicate ou aluminosilicate, en particulier de métal alcalin pour permettre la précipitation du carbonate de plomb.

Le document de E. HAUTALA, J. RANDALL, A. GOODBAN et A. WAISS JR. « Calcium carbonate in the removal of iron and lead from dilute waste water », Water Research, vol. 11, p. 243 to 245, est relatif à l'utilisation du carbonate de calcium dans l'élimination du fer et du plomb à partir d'eaux usées diluées, en particulier les eaux usées acides provenant de la fabrication des batteries au plomb qui ont un pH de 2,3 à 2,6.

Selon ce document, si la neutralisation de solutions acides de fer avec NaOH, Na₂CO₃ ou Ca(OH)₂ entraîne la précipitation de Fe(OH)₃, difficile à décanter et à filtrer, l'addition de CaCO₃ à des solutions contenant du fer et du plomb permet de réduire, après filtration, la concentration de celui-ci jusqu'à moins de 0,3 ppm.

Les traces de plomb dans le filtrat obtenu sont éliminées par une deuxième filtration.

Il est à noter que ce procédé ne permet pas l'élimination des ions sulfates.

Le document de G. MACCHI, D. MARANI, M. PAGANO et G. BAGNUOLO « A bench study on lend removal from battery manufacturing waste water by carbonate precipitation », Water Research, vol. 30, no. 12, p. 3 032 - 3 036, 1996, concerne l'élimination du plomb des eaux usées de fabrication des batteries au plomb, par précipitation du plomb, par le gaz carbonique atmosphérique, sous forme d'hydrocerussite. Il est ainsi possible d'atteindre des teneurs en plomb inférieures à 0,2 ppm. Cependant, du fait que le plomb est amphotère, ce procédé nécessite un contrôle drastique du pH, les eaux usées étant tout d'abord neutralisées par très lente addition de NaOH à un pH de 6,8 à 7,8 sous agitation, puis ajustement du pH, dans la plage préférée de 9 à 9,5.

De nouveau, il est important de mentionner qu'aucun des procédés décrits dans les documents cités ci-dessus ne permet de précipiter à la fois, d'une part, le plomb, et plus généralement les métaux lourds, et, d'autre part, les ions sulfates.

Comme on l'a déjà indiqué plus haut, si les carbonates ont l'avantage de précipiter le plomb sous forme de carbonate associé à l'oxyde et à l'hydroxyde de plomb, quel que soit le carbonate utilisé, qu'il s'agisse de carbonate de sodium ou de carbonate de calcium, seul le plomb est précipité et les ions sulfates restent en solution.

Il existe donc un besoin pour un procédé de traitement par précipitation des métaux lourds et des ions sulfates contenus dans un milieu liquide, tel qu'un milieu aqueux qui permette l'élimination simultanée aussi bien des métaux lourds que des ions sulfates.

Il existe encore un besoin pour un procédé qui réduise considérablement ou-annule la quantité de métaux lourds rejetés dans l'environnement, à l'issue du traitement, et qui permette un stockage sûr de ces métaux.

Enfin, ce procédé doit être simple, fiable, reproductible, ne comporter qu'un nombre limité d'étapes, et ne mettre en jeu que des réactifs facilement disponibles et d'un faible coût.

Le but de la présente invention est de fournir un procédé de traitement d'un milieu liquide, notamment aqueux, contenant au moins un métal lourd et des ions sulfates, qui réponde, entre autres, à l'ensemble des besoins et exigences indiqués ci-dessus.

Le but de la présente invention est encore de fournir un procédé de traitement d'un milieu liquide, notamment aqueux, contenant au moins un métal lourd et des ions sulfates qui ne présente pas les inconvénients, limitations, défauts et désavantages des procédés de l'art antérieur et qui résolve les problèmes des procédés de l'art antérieur.

Ce but et d'autres encore, sont atteints, conformément à l'invention, par un procédé de traitement d'un milieu liquide contenant au moins un métal lourd et des ions sulfates, dans lequel on met en contact le milieu liquide avec du carbonate de baryum, moyennant quoi, on obtient, d'une part, un précipité contenant essentiellement tous les métaux lourds et les ions sulfates initialement contenus dans ledit milieu liquide, et, d'autre part, un milieu liquide essentiellement exempt de métal lourd et d'ion sulfate, et on sépare ledit précipité dudit milieu liquide essentiellement exempt de métal lourd et d'ion sulfate.

De manière totalement surprenante, le procédé selon l'invention permet la précipitation, non seulement du métal lourd sous forme de carbonate de métal lourd, tel que le carbonate de plomb, mais aussi des ions sulfates présents dans le milieu liquide à traiter.

Au contraire, des autres carbonates utilisés dans les procédés de l'art antérieur, tels que le carbonate de calcium, avec lesquels les ions sulfates restent en solution, le carbonate de baryum, de manière étonnante, assure une précipitation complète du métal lourd, tel que le plomb, sous forme de carbonate de métal lourd associé à l'oxyde et à l'hydroxyde de métal lourd, ainsi qu'une précipitation complète des sulfates essentiellement sous forme de sulfate de baryum.

Il n'était absolument pas prévisible que le fait de remplacer, par exemple, le sodium ou le calcium par le baryum conduirait à un tel résultat qui apporte une solution pour la première fois au problème non résolu jusqu'alors du traitement des milieux liquides contenant à la fois des ions sulfates et des métaux lourds, tels que le plomb.

De plus, le procédé selon l'invention est simple, fiable, reproductible, comporte un nombre limité d'étapes et il utilise un seul réactif, le carbonate de baryum facilement disponible et d'un faible coût, ce seul et unique réactif permettant la précipitation des sulfates et des métaux lourds.

En d'autres termes, le carbonate de baryum a l'avantage, outre la précipitation des métaux lourds, tels que le plomb, de précipiter aussi les ions sulfates sous la forme de sulfate de baryum insoluble, produit qui précipite instantanément et qui favorise la précipitation des métaux lourds, tels que le plomb sous forme de carbonate et d'oxyde et d'hydroxyde de métal lourd, tel que le plomb.

Le milieu liquide traité est, de préférence, issu d'un procédé industriel vers lequel ledit milieu liquide essentiellement exempt de métal lourd et d'ion sulfate est recyclé.

La quantité de métal lourd, tel que le plomb, contenue dans le milieu liquide essentiellement exempt de métal lourd et d'ion sulfate obtenus à l'issue de la précipitation est très faible, par exemple de 0,2 à 0,0 mg/l, ou encore 0,1 à 0,05 mg/l, et est comparable, voire inférieure à celle des procédés de l'art antérieur.

De ce fait, le milieu liquide essentiellement exempt de métal lourd et d'ion sulfate pourrait même être rejeté sans causer de problèmes environnementaux et en satisfaisant les normes réglementaires actuelles.

Cependant, le fait de recycler le milieu liquide traité par l'invention a pour effet qu'aucune quantité, si minime soit-elle de métal lourd, tel que le plomb, n'est rejetée dans l'environnement. Il en est de même des ions sulfates.

Le milieu liquide traité est généralement un milieu liquide aqueux, de préférence un milieu liquide aqueux acide.

De préférence, il s'agit d'un milieu liquide aqueux contenant de l'acide sulfurique et des métaux lourds, ce métal lourd étant, de préférence, le plomb.

Ainsi, l'invention s'applique particulièrement au traitement des effluents aqueux acides, ou effluents aqueux sulfuriques contenant du plomb issus du procédé industriel de fabrication des batteries au plomb - acide sulfurique, et/ou du traitement et/ou de la destruction de celles-ci. Dans le cas du traitement de tels effluents, le milieu liquide, essentiellement exempt de métal lourd et d'ion sulfate, est une solution aqueuse essentiellement exempte de plomb et de pH voisin de la neutralité, par exemple, avec un pH dans une gamme de 5 à 7, qui, de ce fait, est recyclée dans le procédé de fabrication et/ou de destruction et/ou de traitement des batteries au plomb acide - sulfurique. Le procédé est avantageux dans le cas de la destruction ou décontamination de batteries, puisque l'eau obtenue est recyclée pour décontaminer un autre lot de batteries, sans rejets.

Le précipité est traité pour séparer le métal ou les métaux lourd(s) de la masse du précipité et le précipité, débarassé totalement du ou des métal(métaux) lourd(s), est stocké ou rejeté.

De manière plus précise, le procédé selon l'invention est un procédé de traitement d'un milieu liquide contenant au moins un métal lourd et des ions sulfates : par métal lourd, on entend généralement un métal dont la masse atomique est moyenne ou élevée, à savoir, un métal dont la masse atomique est supérieure à celle du sodium (22.9).

Le(les) métal(métaux) lourd(s) concerné(s) par le procédé de l'invention est(sont) généralement choisi(s) parmi l'antimoine, l'arsenic, le bismuth, le cadmium, le chrome, le cobalt, le cuivre, l'étain, le manganèse, le molybdène, le sélénium, le nickel, l'or, le platine, le plomb, le mercure, le thallium, le tungstène, le zinc, l'aluminium, le fer et les actinides.

Plus particulièrement encore, le(les) métal(métaux) lourd(s) concerné(s) par le procédé de l'invention est(sont) le (les) métal (métaux) considéré(s) comme toxique(s) pour les plantes, les animaux et les hommes et qui se concentre (nt) le long des chaînes alimentaires. Ce sont ces métaux que le terme « métaux lourds » désigne plus couramment, il s' agit du plomb, du mercure, de l'arsenic, du zinc, du cadmium, du chrome, du nickel, du sélénium, du cuivre et du platine.

Le métal, principalement visé par le procédé de l'invention, est le plomb.

Généralement, le milieu liquide à traiter, en particulier lorsqu'il s'agit d'un milieu aqueux, tel qu'une solution, contient de 10 à 0 mg/l de métal lourd, par exemple de 8 à 1 mg/l, ou encore de 4 à 2 mg/l de métal lourd.

La concentration en ions sulfates du milieu liquide à traiter est généralement de 0,5 mole/l à 0,01 mole/l.

Le milieu liquide à traiter est généralement un milieu aqueux, on entend par milieu aqueux, un milieu dans lequel le solvant ou véhicule majoritaire est de l'eau, l'eau pouvant se trouver en mélange avec un ou plusieurs autres solvants ou véhicules minoritaires.

Le milieu traité par le procédé de l'invention est généralement un effluent liquide issu d'un procédé industriel. Grâce au procédé de l'invention, et à l'issue de celui-ci, le milieu essentiellement, substantiellement exempt de métal lourd et d'ion sulfate, peut être recyclé vers le procédé industriel. De ce fait, aucun métal lourd et aucun ion sulfate n'est rejeté.

Les procédés industriels, générant des effluents, rejets, liquides, susceptibles d'être traités par le procédé de l'invention, sont tous les procédés de fabrication, de traitement, de retraitement de destruction ou autres, dans lesquels sont mis en oeuvre des métaux lourds et des ions sulfates, en particulier sous la forme d'acide sulfurique.

A titre d'exemple, de tels procédés, on peut citer les procédés de traitement de surface, de tannage, et d'extraction de métaux dans l'industrie minière.

Les effluents traités par le procédé de l'invention sont, de préférence, des effluents aqueux, tels que les eaux de lavage ou de rinçage de solides chargés en métaux lourds. En particulier, il s'agit d'effluents aqueux acide, notamment les effluents aqueux acides contenant un métal lourd et de-l'acide sulfurique.

De tels effluents sont en particulier ceux issus de la fabrication des batteries au plomb - acide sulfurique, et/ou de la destruction et/ou du traitement des batteries usagées.

De tels effluents sont très acides avec un pH de 1,5 à 2,5 et peuvent être cependant facilement traités par le procédé de l'invention.

Le milieu liquide à traiter est, selon l'invention, mis en contact avec du carbonate de baryum, cette mise en contact peut se faire en ajoutant directement le carbonate de baryum sous forme solide au milieu liquide, ou bien on peut préparer une solution ou suspension de carbonate de baryum, par exemple une solution aqueuse et ajouter cette solution ou suspension au milieu liquide à traiter.

La quantité de carbonate de baryum mise en oeuvre est variable ; elle est fonction du pH, et on ajoute généralement la quantité stoechiométrique nécessaire pour neutraliser l'acidité du milieu liquide à traiter, par exemple, l'acide présent, tel que l'acide sulfurique.

De manière générale, la quantité de carbonate de baryum ajouté doit être telle que les métaux lourds et les sulfates soient substantiellement totalement éliminés du milieu liquide et que le milieu liquide obtenu au terme du procédé soit un milieu liquide essentiellement exempt de métal lourd et d'ion sulfate et qui remplisse en particulier les conditions pour être recyclé dans un procédé industriel.

Ainsi, dans le cas du traitement d'effluents acides, en particulier sulfuriques, chargés en métaux lourds, en particulier en plomb, tels que les effluents issus de la fabrication et/ou du traitement et/ou de la destruction des batteries au plomb - acide sulfurique, le pH final doit être neutre, afin de pouvoir recycler l'eau traitée pour en faire une eau d'alimentation compatible avec le procédé de fabrication, de traitement ou de destruction des batteries au plomb - acide sulfurique.

De ce fait, un pH acide du milieu liquide, à savoir de la solution aqueuse obtenue à la fin du procédé est exclus si l'on souhaite recycler l'eau traitée. Les quantités de carbonate de baryum ajoutées aux effluents à traiter seront donc dans ce cas au moins équivalente à celle nécessaire à la neutralisation des ions sulfates et à la précipitation du métal lourd, tel que le plomb sous sa forme carbonate. Cette condition de pH neutre est réalisée spontanément par le carbonate de baryum, qui, en effet, ne se solubilise que par réaction en milieu acide.

Il est à noter que, selon l'invention, il n'est pas nécessaire de réaliser un contrôle précis et contraignant du pH, puisque la simple addition et la solubilisation du carbonate de baryum suffisent à assurer le pH voulu.

La mise en contact du carbonate de baryum avec le milieu liquide est, de préférence, réalisée à une température de 0 à 30°C, de préférence, à température ambiante, proche de 20°C.

L'addition du carbonate de baryum au milieu liquide est effectuée sous agitation et cette agitation est ensuite poursuivie pendant une durée généralement de 20 à 5 minutes. Puis, on laisse reposer le milieu liquide, de préférence à température ambiante, pendant une durée généralement de 20 à 10 minutes, afin de faire décanter le précipité formé.

On procède ensuite à la séparation du précipité, cette séparation peut être effectuée par tout procédé de séparation liquide - solide connu, par exemple par décantation, filtration, ou centrifugation du milieu liquide qui est généralement défini comme étant une suspension. Le procédé de séparation préféré est la filtration.

A l'issue de l'opération de séparation, on obtient, d'une part, un précipité contenant essentiellement tous les métaux lourds et tous les ions sulfates initialement contenus dans le milieu liquide et, d'autre part, un milieu liquide essentiellement exempt de métal lourd et d'ion sulfate. Par « essentiellement exempt », on entend que la teneur en métal lourd est généralement de 0,2 à 0,0 mg/l, par exemple de 0,1 à 0,05 mg/l, notamment pour le plomb.

De telles teneurs pourraient permettre le rejet de ce milieu liquide traité, et satisfont aux normes réglementaires en vigueur, mais on a vu que, selon l'invention, on préférait recycler ce liquide, afin de supprimer totalement les rejets. De même, par « essentiellement exempt de sulfates », on entend que la teneur en sulfates est généralement inférieure à 10⁻³ mmol/l, par exemple inférieure à 10⁻⁴ mmol/l.

Le précipité contient des sulfates sous la forme de sulfate de baryum, et le ou les métaux lourds, tels que le plomb, sous forme de carbonate, et/ou d'oxyde et d'hydroxyde. Le précipité peut être traité par des procédés connus permettant de séparer le ou les métaux lourds, tels que le plomb de la masse du précipité formée essentiellement de sulfate de baryum. De tels procédés sont les procédés connus de dosage quantitatif du baryum en vue de la séparation des éléments métal lourd (plomb) et baryum.

Un procédé permettant d'enlever le plomb de la masse de sulfate de baryum est celui de dosage quantitatif du baryum, en présence de plomb, décrit dans l'ouvrage de G. CHARLOT « Chimie analytique quantitative », Tome II, Sixième édition des « Méthodes sélectionnées d'analyse chimique des éléments », Chapitre VII, « Baryum », p. 350 - 351, MASSON et Cie, Ed., Paris, 1974.

Le métal lourd, tel que le plomb, ou les métaux lourds séparé(s) peut(peuvent) être réutilisé(s) dans tout procédé, tandis que le précipité, débarrassé totalement du ou des métaux lourds, tel que le plomb, peut être stocké ou rejeté sans problèmes.

L'invention va maintenant être décrite en référence aux exemples suivants, donnés à titre illustratif et non limitatif.

### Exemples 1 à 8

Ces exemples illustrent le traitement d'effluents aqueux de batteries au plomb par le procédé de l'invention.

Le mode opératoire est le suivant : à 100 ml d'une solution d'effluents de batteries contenant 2,34 mg de plomb/l (dont le dosage par absorption atomique correspond à 32 - 40 unités de lecture), on ajoute du carbonate de baryum en une quantité d'environ 990 mg (exemples 1 à 4) ou d'environ 600 mg (exemples 5 à 8). Puis, la solution est agitée pendant une durée variable, selon les exemples, de 20, 10 ou 5 minutes.

La solution est ensuite filtrée.

On mesure le pH du filtrat et les sels récupérés sur le filtre sont pesés après séchage à l'air.

Le dosage du plomb est effectué par specphotométrie d'absorption atomique (λ = 217 nm) par rapport à une courbe étalon, directement sur le filtrat et également sur le filtrat acidifié par addition de HNO₃.

En ajoutant de l'acide nitrique, on a l'assurance de doser tout le plomb, on solubilise ainsi en effet tout le plomb, quelle que soit la forme dans laquelle il se trouve, à savoir même sous forme hydroxyde ou oxyde et on réalise un dosage du plomb total : carbonate, oxyde et hydroxyde de plomb.

Les paramètres du procédé et les résultats des mesures sont donnés dans le tableau I.

**Tableau I**

| EXEMPLE | TEMPS DE CONTACT | POIDS DE BaCO₃ (mg) | pH APRES TRAITEMENT | POIDS RECUPERE SUR LE FILTRE (mg) | DOSAGE DU Pb (UNITES DE LECTURE) | DOSAGE DU Pb EN MILIEU ACIDE (UNITES DE LECTURE) |
|---|---|---|---|---|---|---|
| 1 | 20 minutes | 987,2 | 7,20 | 1 124,1 | 1 - 2 | 1 - 3/3 |
| 2 | 15 minutes | 989,3 | 7,16 | 1 129,8 | 0 - 1 | 4 - 3/1 - 2 |
| 3 | 10 minutes | 987,2 | 6,13 | 1 107,0 | 0 - 2 | 5 - 4/1 - 2 |
| 4 | 5 minutes | 990,9 | 6,07 | 1 128,7 | 2 | 4 - 5/2 - 3 |
| 5 | 20 minutes | 603,0 | 6,22 | 723,5 | 3 - 4 | 8 - 7 |
| 6 | 15 minutes | 602,8 | 6,45 | 721,1 | 3 - 5 | 9 -7/3- 2 |
| 7 | 10 minutes | 603,5 | 7,13 | 704,6 | 1 - 2 | 0 - 1/2 - 1 |
| 8 | 5 minutes | 606,5 | 4,18 | 961,0 | 1 - 2 | 5 - 6 |

On constate, d'après les résultats des dosages, que le filtrat est presque totalement exempt de plomb.

### Exemple 9

Dans cet exemple, on effectue le traitement d'effluents provenant de la destruction de batteries au plomb usagées par le procédé de l'invention, puis on simule le recyclage des effluents traités dans le procédé de destruction des batteries au plomb.

Les échantillons d'effluents traités sont de 500 ml, dont la teneur en plomb est de 2,34 mg/l. On ajoute 4,9 g de carbonate de baryum aux échantillons de solutions polluées ; on agite pendant 10 minutes ; on filtre.

Afin de simuler un recyclage dans le procédé de fabrication, on prend le pH de la solution filtrée puis elle est amenée à siccité. On ajoute au résidu sec obtenu 500 ml de solution polluée, on note le pH de la solution « reconstituée » obtenue et on recommence cinq fois.

La solution « reconstituée » simule en fait la solution qui serait utilisée dans le procédé de fabrication et qui serait constituée par la solution recyclée mélangée à la solution se trouvant dans le procédé de fabrication des accumulateurs.

On mesure par ailleurs le poids du précipité récupéré sur le filtre.

Le dosage du plomb dans le précipité est fait en reprenant celui-ci dans de l'acide nitrique (2N, 150 ml), le volume est ensuite amené à 500 ml. Puis, on rajoute de l'EDTA pour dissoudre le plomb piégé dans le précipité. La technique de dosage utilisé est l'absorption atomique.

Les résultats obtenus sont récapitulés dans le tableau II.

**Tableau II**

| | pH AVANT AJOUT DE BaCO₃ | pH APRES AJOUT DE BaCO₃ | POIDS RECUPERE | PLOMB |
|---|---|---|---|---|
| DEPART | | | | 32 - 90 (2,34 mg/l de Pb) |
| PREMIER CYCLE | 1,25 | 7, 72 | 5,3473 g | 34 - 35 : 33 |
| DEUXIEME CYCLE | 1,48 | 8,09 | 5,3329 g | 30 - 31 |
| TROISIEME CYCLE | 1,41 | 7,74 | 5,6224 g | 30 - 31 |
| QUATRIEME CYCLE | 1,64 | 7,25 | 5,4266 g | 30 - 31 |
| CINQUIEME CYCLE | 1,44 | 6,13 | 5,3984 g | 28 - 30 |

On note donc que la quasi-totalité du plomb est éliminé dans le précipité et que le pH « après ajout » (de BaCO₃) de la solution recyclée est un pH voisin de 7, donc tout à fait compatible avec les exigences du procédé de destruction.

## Revendications

1. Procédé de traitement d'un milieu liquide contenant au moins un métal lourd et des ions sulfates, dans lequel on met en contact le milieu liquide avec du carbonate de baryum, moyennant quoi, on obtient, d'une part, un précipité contenant essentiellement tous les métaux lourds et les ions sulfates initialement contenus dans ledit milieu liquide, et, d'autre part, un milieu liquide essentiellement exempt de métal lourd et d'ion sulfate, et on sépare ledit précipité dudit milieu liquide essentiellement exempt de métal lourd et d'ion sulfate.

2. Procédé selon la revendication 1, dans lequel ledit milieu liquide est issu d'un procédé industriel vers lequel ledit milieu liquide essentiellement exempt de métal lourd et d'ion sulfate est recyclé.

3. Procédé selon l'une quelconque des revendications 1 et 2, dans lequel ledit milieu liquide est un milieu liquide aqueux.

4. Procédé selon la revendication 3, dans lequel ledit milieu liquide aqueux est un milieu liquide aqueux acide.

5. Procédé selon la revendication 3, dans lequel ledit milieu liquide contient de l'acide sulfurique.

6. Procédé selon la revendication 5, dans lequel ledit métal lourd est le plomb.

7. Procédé selon la revendication 6, dans lequel ledit milieu liquide est constitué par les effluents aqueux sulfuriques contenant du plomb issus d'un procédé industriel de fabrication des batteries au plomb - acide sulfurique, et/ou de traitement et/ou de destruction de celles-ci.

8. Procédé selon la revendication 7, dans lequel le milieu liquide essentiellement exempt de métal lourd et d'ion sulfate est constitué par une solution aqueuse essentiellement exempte de plomb, et de pH voisin de la neutralité qui est recyclée dans le procédé industriel de fabrication des batteries au plomb - acide sulfurique, et/ou de traitement et/ou de destruction de celles-ci.

9. Procédé selon l'une quelconque des revendications 1 à 8, dans lequel le précipité est traité pour séparer le ou les métal(métaux) lourd(s) de la masse du précipité, et le précipité débarrassé totalement du ou des métal(métaux) lourd(s) est stocké ou rejeté.

## Patentansprüche

1. Verfahren zur Behandlung eines flüssigen Mediums, das mindestens ein Schwermetall und Sulfationen enthält,
bei dem man das flüssige Medium mit Bariumcarbonat in Kontakt bringt, wodurch man einerseits einen Niederschlag, der im Wesentlichen alle Schwermetalle und die Sulfationen enthält, die zu Beginn in dem genannten flüssigen Medium enthalten waren, und andererseits ein flüssiges Medium,
das im Wesentlichen frei von Schwermetallen und Sulfationen ist, erhält, und bei dem man den genannten Niederschlag von dem genannten flüssigen Medium abtrennt, das im Wesentlichen frei von Schwermetallen und Sulfationen ist.

2. Verfahren nach Anspruch 1, bei dem das genannte flüssige Medium aus einem industriellen Verfahren stammt, in welches das genannte flüssige Medium, das im Wesentlichen frei von Schwermetallen und Sulfationen ist, im Kreislauf zurückgeführt wird.

3. Verfahren nach einem der Ansprüche 1 und 2, bei dem das genannte flüssige Medium ein wässriges flüssiges Medium ist.

4. Verfahren nach Anspruch 3, bei dem das genannte wässrige flüssige Medium ein saures wässriges flüssiges Medium ist.

5. Verfahren nach Anspruch 3, bei dem das genannte flüssige Medium Schwefelsäure enthält.

6. Verfahren nach Anspruch 5, bei dem das genannte Schwermetall Blei ist.

7. Verfahren nach Anspruch 6, bei dem das genannte flüssige Medium aus Blei enthaltenden wässrigen Schwefelsäureabströmen besteht, die aus einem industriellen Verfahren zur Herstellung von Blei-Schwefelsäure-Batterien und/oder zur Behandlung und/oder zur Beseitigung (Zerstörung) derselben stammen.

8. Verfahren nach Anspruch 7, in dem das flüssige Medium, das im Wesentlichen frei von Schwermetallen und Sulfationen ist, aus einer im Wesentlichen bleifreien wässrigen Lösung besteht, die einen pH-Wert in der Nähe des Neutralpunktes hat und die in das industrielle Verfahren zur Herstellung von Blei-Schwefelsäure-Batterien und/oder zur Behandlung und/oder zur Beseitigung (Zerstörung) derselben im Kreislauf zurückgeführt wird.

9. Verfahren nach einem der Ansprüche 1 bis 8, bei dem der Niederschlag behandelt wird, um das oder die Schwermetall bzw. Schwermetalle von der Masse des Niederschlags abzutrennen, und der Niederschlag, der vollständig frei von dem oder den Schwermetall bzw. Schwermetallen ist, gelagert oder entsorgt wird.

## Claims

1. Method for treating a liquid medium containing at least one heavy metal and sulphate ions, in which the liquid medium is contacted with barium carbonate, whereby on the one hand, a precipitate is obtained essentially containing all the heavy metals and the sulphate ions initially present in the said liquid medium, and, on the other, a liquid medium is obtained essentially free of heavy metal and of sulphate ion, and the said precipitate is separated from the said liquid medium essentially free of heavy metal and sulphate ion.

2. Method according to Claim 1, in which the said liquid medium issues from an industrial process to which the said liquid medium essentially free of heavy metal and sulphate ion is recycled.

3. Method according to either of Claims 1 and 2, in which the said liquid medium is an aqueous liquid medium.

4. Method according to Claim 3, in which the said aqueous liquid medium is an acidic aqueous liquid medium.

5. Method according to Claim 3, in which the said liquid medium contains sulphuric acid.

6. Method according to Claim 5, in which the said heavy metal is lead.

7. Method according to Claim 6, in which the said liquid medium consists of sulphuric aqueous effluents containing lead issuing from an industrial process of lead battery-sulphuric acid manufacture, and/or the treatment and/or destruction thereof.

8. Method according to Claim 7, in which the liquid medium essentially free of heavy metal and sulphate ion consists of an aqueous solution essentially free of lead, and with a pH close in neutral, that is recycled to the industrial process of lead battery-sulphuric acid manufacture, and/or the treatment and/or destruction thereof.

9. Method according to any one of Claims 1 to 8, in which the precipitate is treated to separate the heavy metal or metals from the mass of precipitate, and the precipitate totally stripped of the heavy metal or metals is stored or disposed of.
